(19) Europäisches Patentamt
European Patent Office
Office européen des brevets

(11) EP 2 551 315 B1

(12) **EUROPEAN PATENT SPECIFICATION**

(45) Date of publication and mention of the grant of the patent:
**31.12.2014 Bulletin 2015/01**

(21) Application number: **11758991.1**

(22) Date of filing: **18.03.2011**

(51) Int Cl.:
***C09J 7/02*** *(2006.01)* ***C09J 133/04*** *(2006.01)*
***C08K 3/10*** *(2006.01)* ***C08K 3/22*** *(2006.01)*
***C08K 7/22*** *(2006.01)* ***C08K 7/28*** *(2006.01)*
***C08F 120/18*** *(2006.01)* ***C08F 220/14*** *(2006.01)*
***C08F 220/18*** *(2006.01)* ***C08F 222/10*** *(2006.01)*
***C09D 133/06*** *(2006.01)*

(86) International application number:
**PCT/JP2011/001618**

(87) International publication number:
**WO 2011/118180 (29.09.2011 Gazette 2011/39)**

(54) **ACRYLIC ADHESIVE TAPE**
ACRYLKLEBEBAND
RUBAN ADHÉSIF ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2010 JP 2010070369**

(43) Date of publication of application:
**30.01.2013 Bulletin 2013/05**

(73) Proprietor: **Nitto Denko Corporation**
**Ibaraki-shi, Osaka 567-8680 (JP)**

(72) Inventors:
- **OKAMOTO, Masayuki**
**Ibaraki-shi**
**Osaka 567-8680 (JP)**
- **NIWA, Masahito**
**Ibaraki-shi**
**Osaka 567-8680 (JP)**
- **AKIYAMA, Jun**
**Ibaraki-shi**
**Osaka 567-8680 (JP)**
- **SHIGETOMI, Kiyoe**
**Ibaraki-shi**
**Osaka 567-8680 (JP)**

(74) Representative: **Grünecker, Kinkeldey, Stockmair & Schwanhäusser**
**Leopoldstrasse 4**
**80802 München (DE)**

(56) References cited:
**WO-A1-2008/070386**
**JP-A- 56 086 979**
**JP-A- 58 118 872**
**JP-A- 2008 174 648**
**JP-A- 2010 184 979**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 551 315 B1

**Description**

Technical Field

The present invention relates to an acrylic pressure-sensitive adhesive tape.

Background Art

Because acrylic pressure-sensitive adhesive tapes each having an acrylic pressure-sensitive adhesive layer are excellent in light resistance, weatherability, oil resistance, etc., and further excellent in adhesiveness, such as pressure-sensitive adhesive force, resistance to resilience, and holding property (cohesive force), and aging resistance, such as heat resistance and weatherability, the acrylic pressure-sensitive adhesive tapes have been conventionally used in wide applications. In particular, the acrylic pressure-sensitive adhesive tapes having such properties have been widely used as joining materials in various industrial fields, such as home electronic appliances, building materials, and automobile interior and exterior materials. Accordingly, the acrylic pressure-sensitive adhesive tapes are required to be adhered, with high reliability, to various adherends (objects to be joined) including: metallic materials, such as stainless steel and aluminum; various plastic materials, such as polyethylene, polypropylene, polystyrene, ABS, (meth)acrylic resin, and polycarbonate resin; and glass materials.

A method of adding a tackifying resin (tackifier) to an acrylic pressure-sensitive adhesive composition that forms an acrylic pressure-sensitive adhesive layer is known as a method of enhancing the adhesiveness of an acrylic pressure-sensitive adhesive tape to an adherend. Patent Documents 1 and 2 disclose acrylic pressure-sensitive adhesive compositions in each of which rosin or a hydrogenated petroleum resin has been added, as a tackifying resin, to an acrylic polymer.

Patent Documents

[Patent Document 1] Japanese Patent Application Publication No. 1994-207151
[Patent Document 2] Japanese Patent Application Publication (Translation of PCT Application) No. 1999-504054

WO 2008/070386 A1 discloses a tape comprising a foam backing having a first major surface and a second major surface, and a first adhesive skin bonded to the first major surface, wherein the first adhesive skin comprises a first pressure-sensitive adhesive formed from a composition comprising 92 to 99.9 parts of a block copolymer adhesive composition comprising a first block copolymer comprising at least one rubbery block and at least one glassy block, further 0.1 to less than 10 parts of an acrylic adhesive composition comprising from 70 to 100 parts of at least one acrylic or methacrylic ester of a non-tertiary alkyl alcohol containing 4 to 20 carbon atoms and 0 to 70 parts of a copolymerized reinforcing monomer.

DISCLOSURE OF THE INVENTION

Problem to be Solved by the Invention

Acrylic pressure-sensitive adhesive tapes are always required to have improved adhesiveness to adherends. In particular, it is strongly required that acrylic pressure-sensitive adhesive tapes should have improved adhesiveness to adherends having low polarity represented by polyolefin resins, such as polyethylene and polypropylene, which are frequently used for home electric appliances, building materials, and automobile interior and exterior materials, etc. On the other hand, there are sometimes the cases where the aforementioned acrylic pressure-sensitive adhesive composition to which a tackifying resin, such as rosin, has been added does not sufficiently meet the demand that the adhesiveness of an acrylic pressure-sensitive adhesive tape to an adherend having low polarity should be improved.

The present invention has been made in view of these situations, and a purpose of the invention is to provide a technique in which the adhesiveness of an acrylic pressure-sensitive adhesive tape can be improved.

Means for Solving the Problem

An embodiment according to the present invention is an acrylic pressure-sensitive adhesive tape. The acrylic pressure-sensitive adhesive tape comprises: a core layer; and a surface layer provided on one or both sides of the core layer, in which the core layer contains an acrylic polymer (A), and the surface layer contains an acrylic polymer (D) and

a (meth) acrylic polymer (E) that includes, as a monomer unit, a (meth)acrylic monomer having a tricyclic or higher alicyclic structure and that has a weight average molecular weight of 1000 or more and less than 30000.

According to the acrylic pressure-sensitive adhesive tape of this embodiment, the adhesiveness of the acrylic pressure-sensitive adhesive tape can be improved.

In the acrylic pressure-sensitive adhesive tape according to the aforementioned embodiment, the (meth)acrylic monomer may be a (meth)acrylic acid ester represented by the following general formula (1):

$$CH_2=C(R^1)COOR^2 \qquad (1)$$

[wherein, $R^1$ is a hydrogen atom or methyl group and $R^2$ is an alicyclic hydrocarbon group having a tricyclic or higher alicyclic structure].

In the acrylic pressure-sensitive adhesive composition according to the aforementioned embodiment, the alicyclic hydrocarbon group may have a bridged ring structure. The content of the (meth) acrylic polymer (E) may be within a range of 2 to 70 parts by weight based on 100 parts by weight of the acrylic polymer (D). The core layer may contain a fine particle (B) and a bubble (C).

Advantage of the Invention

According to the present invention, the adhesiveness of an acrylic pressure-sensitive adhesive tape can be improved.

BRIEF DESCRIPTION OF THE DRAWING

Fig. 1 is a schematic sectional view illustrating the structure of an acrylic pressure-sensitive adhesive tape according to an embodiment.

BEST MODE FOR CARRYING OUT THE INVENTION

Hereinafter, embodiments according to the present invention will be described with reference to the accompanying drawing.

Fig. 1 is a schematic sectional view illustrating the structure of an acrylic pressure-sensitive adhesive tape according to an embodiment. The acrylic pressure-sensitive adhesive tape 10 comprises: a core layer 20; a surface layer 30a provided on one of the surfaces of the core layer 20; and a surface layer 30b provided on the other surface of the core layer 20. Hereinafter, the surface layer 30a and surface layer 30b are appropriately and collectively referred to as a surface layer 30.

(Core Layer)

The core layer 20 contains an acrylic polymer (A), and if necessary, a fine particle (B) and a bubble (C). Hereinafter, each component of the core layer 20 will be described in detail.

[Acrylic Polymer (A)]

The acrylic polymer (A), a pressure-sensitive adhesive composition that forms the core layer 20, contains, as a monomer unit, approximately 50% by weight or more of (meth) acrylic acid alkyl ester having a linear or branched-chain $C_{1-20}$ alkyl group. The acrylic polymer (A) may have a structure in which the (meth) acrylic acid alkyl ester having a $C_{1-20}$ alkyl group is used alone or in combination of two or more thereof. The acrylic polymer (A) can be obtained by polymerizing (for example, solution polymerization, emulsion polymerization, or UV polymerization) the (meth)acrylic acid alkyl ester along with a polymerization initiator.

The ratio of the (meth)acrylic acid alkyl ester having a $C_{1-20}$ alkyl group is within a range of approximately 50% by weight or more to approximately 99.9% by weight or less, preferably within a range of approximately 60% by weight or more to approximately 95% by weight or less, and more preferably within a range of approximately 70% by weight or more to approximately 93% by weight or less, based on the total weight of the monomer components for preparing the acrylic polymer (A).

Examples of the (meth) acrylic acid alkyl ester having a $C_{1-20}$ alkyl group include, for example: (meth) acrylic acid $C_{1-20}$ alkyl esters [preferably (meth)acrylic acid $C_{2-14}$ alkyl esters, and more preferably (meth) acrylic acid $C_{2-10}$ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl,

(meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl (2-ethylhexyl(meth)acrylate), (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl. Herein, the " (meth) acrylic acid alkyl ester" means an acrylic acid alkyl ester and/or a methacrylic acid alkyl ester, and all of the "(meth)..." expressions have the same meaning.

Examples of the (meth)acrylic acid ester other than the (meth)acrylic acid alkyl ester include, for example: (meth) acrylic acid esters having an alicyclic hydrocarbon group, such as cyclopentyl(meth)acrylate, cyclohexyl(meth)acrylate, and isobornyl (meth) acrylate; (meth) acrylic acid esters having an aromatic hydrocarbon group, such as phenyl(meth)acrylate; and (meth)acrylic acid esters obtained from alcohols derived from terpene compounds, etc.

For the purpose of modifying cohesive force, heat resistance, and cross-linking property, the acrylic polymer (A) may contain, if necessary, another monomer component (copolymerizable monomer) that is copolymerizable with the (meth)acrylic acid alkyl ester. Accordingly, the acrylic polymer (A) may contain a copolymerizable monomer along with the (meth) acrylic acid alkyl ester as a major component. A monomer having a polar group can be preferably used as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl)methyl methacrylate, etc.; acid anhydride group-containing monomers, such as maleic acid anhydride and itaconic acid anhydride; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid; phosphate group-containing monomers, such as 2-hydroxyethyl acryloyl phosphate; (N-substituted)amide monomers, such as (meth)acrylamide, N,N-dialkyl(meth)acrylamides including N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide, N-ethyl(meth)acrylamide, N-isopropyl(meth)acrylamide, N-butyl(meth)acrylamide, N-n-butyl(meth)acrylamide, N-methylol(meth)acrylamide, N-ethylol(meth)acrylamide, N-methylol propane (meth) acrylamide, N-methoxymethyl(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl-2-piperidone, N-vinyl-3-morpholine, N-vinyl-2-caprolactam, N-vinyl-1,3-oxazine-2-one, N-vinyl-3,5-morpholinedione, N-vinyl pyrazole, N-vinyl isoxazole, N-vinyl thiazole, N-vinyl isothiazole, and N-vinyl pyridazine; N-vinyl carboxylic acid amides; lactam monomers, such as N-vinyl caprolactam; cyanoacrylate monomers, such as acrylonitrile and methacrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth)acrylic acid methoxyethyl and (meth)acrylic acid ethoxyethyl; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; vinyl esters, such as vinyl acetate and vinyl propionate; aromatic vinyl compounds, such as vinyl toluene and styrene; olefins or dienes, such as ethylene, butadiene, isoprene, and isobutylene; vinyl ethers, such as vinyl alkyl ether; vinyl chloride; (meth)acrylic acid alkoxy alkyl monomers, such as (meth)acrylic acid methoxyethyl and (meth)acrylic acid ethoxyethyl; sulfonic acid group-containing monomers such as vinyl sulfonate sodium; imide group-containing monomers, such as cyclohexyl maleimide and isopropyl maleimide; isocyanate group-containing monomers, such as 2-isocyanate ethyl (meth) acrylate; and amide group-containing vinyl monomers, such as N-acryloyl morpholine, etc. These copolymerizable monomers can be used alone or in combination of two or more thereof.

When the acrylic polymer (A) contains a copolymerizable monomer along with the (meth) acrylic acid alkyl

ester as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of approximately 0.1 to approximately 40% by weight, preferably within a range of approximately 0.5 to approximately 30% by weight, and more preferably within a range of approximately 1 to approximately 20% by weight, based on the total weigh of the monomer components for preparing the acrylic polymer (A).

By containing the copolymerizable monomer in an amount of approximately 0.1% by weight or more, a decrease in the cohesive force of the acrylic pressure-sensitive adhesive that forms the core layer 20 can be prevented and high shear force can be obtained. Further, by containing the copolymerizable monomer in an amount of approximately 40% by weight or less, it can be prevented that the cohesive force of the acrylic pressure-sensitive adhesive that forms the core layer 20 may become too high and the tackiness at normal temperature (25°C) can be improved.

A polyfunctional monomer may be contained, if necessary, in the acrylic polymer (A) in order to adjust the cohesive force of the acrylic pressure-sensitive adhesive tape.

Examples of the polyfunctional monomer include, for example: (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth)acrylates can be used alone or in combination of two or more thereof.

The use amount of the polyfunctional monomer is changed depending on the molecular weight or the number of functional groups thereof, but the polyfunctional monomer is added in an amount within a range of approximately 0.01 to approximately 3.0% by weight, preferably within a range of approximately 0.02 to approximately 2.0% by weight, and more preferably within a range of approximately 0.03 to approximately 1.0% by weight, based on the total weight of the monomer components for preparing the acrylic polymer (A).

If the use amount of the polyfunctional monomer is more than approximately 3.0% by weight based on the total weight of the monomer components for preparing the acrylic polymer (A), for example, the cohesive force of the acrylic pressure-sensitive adhesive that forms the core layer 20 may become too high and accordingly there are sometimes the cases where the adhesive force is decreased. On the other hand, if the use amount thereof is less than approximately 0.01% by weight, for example, there are sometimes the cases where the cohesive force of the acrylic pressure-sensitive adhesive that forms the core layer 20 is decreased.

<Polymerization Initiator>

In preparing the acrylic polymer (A), the acrylic polymer (A) can be easily formed by a curing reaction using heat or ultraviolet rays with the use of a polymerization initiator, such as a thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators (for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.); peroxide polymerization initiators (for example, dibenzoyl peroxide, t-butyl permaleate, and lauroyl peroxide, etc.); and redox polymerization initiators, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, $\alpha$-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [product name: IRGACURE 651, made by Ciba Speciality Chemicals Inc.], and anisole methyl ether, etc. Specific examples of the acetophenone photo-polymerization initiator include, for example: 1-hydroxycyclohexyl phenyl ketone [product name: IRGACURE 184, made by Ciba Speciality Chemicals Inc.], 4-phenoxy dichloroacetophenone, 4-t-butyl-dichloroacetophenone, 1-[4-(2-hydroxyethoxy)-phenyl]-2-hydroxy-2-methyl-1-propane-1 -one [product name: IRGACURE 2959, made by Ciba Speciality Chemicals Inc.], 2-hydroxy-2-methyl-1-phenyl-propane-1-one [product name: DAROCUR 1173, made by Ciba Speciality Chemicals Inc.], and methoxy acetophenone, etc. Specific examples of the $\alpha$-ketol photo-polymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and $\alpha$-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:

bis(2,6-dimethoxybenzoyl)phenylphosphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dimethoxybenzoyl)(2-methypropane-1-yl) phosphine oxide, bis(2, 4, 6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

The use amount of the photo-polymerization initiator is not particularly limited, but the photo-polymerization initiator is combined in an amount within a range of, for example, approximately 0.01 to approximately 5 parts by weight, and preferably within a range of approximately 0.05 to approximately 3 parts by weight, based on 100 parts by weight of the monomer components for preparing the acrylic polymer (A).

Herein, if the use amount of the photo-polymerization initiator is less than approximately 0.01 parts by weight, there are sometimes the cases where a polymerization reaction is insufficient. If the use amount thereof is more than approximately 5 parts by weight, there are sometimes the cases where an ultraviolet ray does not reach the inside of the pressure-sensitive adhesive layer, because the photo-polymerization initiator absorbs an ultraviolet ray. In this case, a decrease in the rate of polymerization may be caused, or the molecular weight of the polymer to be generated may become small. Thereby, the cohesive force of the acrylic pressure-sensitive adhesive that forms the core layer 20 becomes small, and accordingly there are sometimes the cases where, when a film is released from the core layer 20, part of the acrylic pressure-sensitive adhesive remains on the film, thereby not allowing the film to be reused. The photo-polymerization initiators may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. Among them, in particular, the isocyanate cross-linking

agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that the monomer component is partially polymerized. The weight average molecular weight (Mw) of the acrylic polymer (A) is, for example, within a range of 30000 to 5000000.

[Fine Particle (B)]

In the present embodiment, fine particles (B) can be added to the acrylic polymer (A) that forms the core layer. The fine particle (B) has operational effects of improving the shear adhesive force and processability of the acrylic pressure-sensitive adhesive tape.

Examples of the fine particles (B) include: metallic particles, such as copper, nickel, aluminum, chromium, iron, and stainless steel, and metal oxide particles thereof; carbide particles, such as silicon carbide, boron carbide, and carbon nitride; nitride particles, such as aluminum nitride, silicon nitride, and boron nitride; ceramic particles represented by oxides, such as glass, alumina, and zirconium; inorganic fine particles, such as calcium carbide, aluminum hydroxide, glass, and silica; natural material particles, such as volcanic Shirasu and sand; polymer particles of polystyrene, polymethyl methacrylate, phenol resin, benzoguanamine resin, urea resin, silicone resin, nylon, polyester, polyurethane, polyethylene, polypropylene, polyamide, and polyimide, etc.; organic hollow bodies of vinylidene chloride and acrylic, etc.; and organic spheres, such as nylon bead, acrylic bead, and silicone bead.

Hollow fine particles can be preferably used as the fine particle (B). Among hollow fine particles, hollow inorganic fine particles can be preferably used in terms of the efficiency of the polymerization using an ultraviolet reaction and weight. Examples of the hollow inorganic fine particles include: glass balloons, such as hollow glass balloons; hollow balloons made of a metallic compound, such as hollow alumina balloons; and hollow balloons made of porcelain, such as hollow ceramic balloons. The high-temperature adhesive force of the acrylic pressure-sensitive adhesive tape can be improved without impairing other properties such as shear force and holding force.

Examples of the hollow glass balloons include, for example, ones: with a product name of Glass Microballoon (made by FUJI SILYSIA CHEMICAL LTD.); with product names of CEL-STAR Z-20, CEL-STAR Z-27, CEL-STAR CZ-31T, CEL-STAR Z-36, CEL-STAR Z-39, CEL-STAR T-36, and CEL-STAR PZ-6000 (each of them is made by Tokai Kogyo Co., Ltd.); and with a product name of SILUX*FINE BALLOON (made by FINE-BALLOON Ltd.), etc.

The size of the fine particle (B) (average particle size) is not particularly limited, but can be selected from a range of, for example, approximately 1 to approximately 500 $\mu$m, preferably from a range of approximately 5 to approximately 200 $\mu$m, and more preferably from a range of approximately 10 to approximately 150 $\mu$m.

The specific gravity of the fine particle (B) is not particularly limited, but can be selected from a range of, for example, approximately 0.1 to approximately 1.8 g/cm$^3$, preferably from a range of approximately 0.2 to approximately 1.5 g/cm$^3$, and more preferably from a range of approximately 0. 2 to approximately 0.5 g/cm$^3$.

If the specific gravity of the fine particle (B) is smaller than approximately 0.1 g/cm$^3$, floating of the fine particles becomes large when the fine particles (B) are combined into the acrylic pressure-sensitive adhesive composition and they are mixed, and accordingly there are sometimes the cases where it is difficult to uniformly scatter the fine particles. In addition, because the strength of the glass becomes low, it will easily crack. Conversely, if the specific gravity thereof is larger than approximately 1.8 g/cm$^3$, the transmission rate of an ultraviolet ray is decreased, and accordingly there is the fear that the efficiency of the ultraviolet reaction may be decreased. In addition, because the weight of the acrylic pressure-sensitive adhesive that forms the core layer 20 becomes large, workability becomes poor.

The use amount of the fine particles (B) is not particularly limited. If the use amount thereof is less than, for example, approximately 10% by volume based on the whole volume of the core layer 20, the effect of the addition of the fine particles (B) is low. On the other hand, if the use amount thereof is more than approximately 50% by volume, there are sometimes the cases where the adhesive force of the acrylic pressure-sensitive adhesive that forms the core layer 20 is decreased.

[Bubble (C)]

In the present embodiment, bubbles (C) can be added to the acrylic polymer (A) that forms the core layer. By containing the bubbles (C) in the core layer 20, the acrylic pressure-sensitive adhesive tape 10 can exhibit good adhesiveness to a curved surface and concave-convex surface, and also exhibit good resistance to resilience.

It is desirable that the bubbles (C) contained in the core layer 20 are basically closed-cell type bubbles, but closed-cell type bubbles and interconnected-cell type bubbles may coexist.

Although the bubble (C) usually has a spherical shape (in particular, a true spherical shape), the shape does not necessarily have to have a true spherical shape and accordingly there may be concavities and convexities on the surface. The average bubble size (diameter) of the bubble (C) is not particularly limited, but can be selected, for example, from a range of approximately 1 to approximately 1000 μm, preferably from a range of approximately 10 to approximately 500 μm, and more preferably from a range of approximately 30 to approximately 300 μm.

A gas component contained in the bubble (C) (gas component that forms the bubble (C); hereinafter, appropriately referred to as a bubble-forming gas) is not particularly limited, but various gas components, such as inactive gases including nitrogen, carbon dioxide, and argon, and air, etc., can be used. When a polymerization reaction is performed in a state where a bubble-forming gas is contained, it is important that the gas that forms the bubble (C) does not hamper the reaction. Nitrogen can be preferably used as a bubble-forming gas in terms of not hampering a polymerization reaction and cost.

The amount of the bubbles (C) contained in the core layer 20 is not particularly limited, but can be appropriately selected in accordance with the application of the tape. The amount of the bubbles (C) contained in the core layer 20 is, for example, within a range of approximately 5 to approximately 50% by volume, and preferably within a range of approximately 8 to approximately 40% by volume, based on the whole volume of the core layer 20 containing the bubbles (C). If the mixing amount of the bubbles is less than approximately 5% by volume, the effect of mixing the bubbles (C) cannot be obtained. Conversely, if the mixing amount thereof is larger than approximately 50% by volume, the possibility that the bubbles each penetrating the core layer 20 may be present is increased, and hence there are sometimes the cases where the adhesive performance or the appearance is deteriorated.

A method of forming the core layer 20 containing the bubbles (C) is not particularly limited. The core layer 20 containing the bubbles (C) may be formed, for example, by using a core layer material into which a bubble-forming gas has been mixed in advance, or (2) by mixing a foaming agent into a core layer material into which a bubble-forming gas has not been mixed. In the case of (2), the foaming agent to be used is not particularly limited, but can be appropriately selected from, for example, publicly-known foaming agents. For example, heat-expandable micro-spheres can be used as such a foaming agent.

<Other Components>

Besides the aforementioned components, a thickener, a thixotropic agent, and fillers, etc., may be added to the core layer 20, if necessary. Examples of the thickener include acrylic rubber, epichlorohydrin rubber, and butyl rubber, etc. Examples of the thixotropic agent include colloid silica and polyvinylpyrrolidone, etc. Examples of the fillers include calcium carbonate, titanium oxide, and clay, etc. Other than those, a plasticizer, anti-aging agent, antioxidant, etc. may be appropriately added to the core layer 20.

(Surface Layer)

The surface layer 30 comprises: an acrylic polymer (D); and a (meth)acrylic polymer (E) that includes, as a monomer unit, a (meth)acrylic monomer having a tricyclic or higher alicyclic structure and that has a weight average molecular weight of 1000 or more and less than 30000 (hereinafter, appropriately referred to as a (meth) acrylic polymer (E)). Hereinafter, each component of the surface layer 30 will be described.

[Acrylic Polymer (D)]

The acrylic polymer (D), a pressure-sensitive adhesive composition to be used in the surface layer 30, can be selected from the compounds (various monomer components) exemplified as the acrylic polymer (A) in the core layer 20. The acrylic polymer (D) used in the surface layer 30 may or may not have the similar components and composition ratio as those of the acrylic polymer (A) in the core layer 20.

In the present embodiment, the acrylic polymer (D) that forms the surface layer can also be prepared as a partial polymer (acrylic polymer syrup) that can be obtained by radiating ultraviolet (UV) rays onto a mixture in which the aforementioned monomer components and the polymerization initiator have been combined, so that the monomer components are partially polymerized. An acrylic pressure-sensitive adhesive composition is prepared by combining the

later-described (meth) acrylic polymer (E) into the acrylic polymer syrup, and then polymerization can also be completed by coating the pressure-sensitive adhesive composition on a predetermined object to be coated and by radiating UV rays. The weight average molecular weight (Mw) of the acrylic polymer (D) is, for example, within a range of 30000 to 5000000.

[(Meth)Acrylic Polymer (E)]

The (meth)acrylic polymer (E) is a polymer having a weight average molecular weight smaller than that of the acrylic polymer (D), and functions as a tackifying resin and has the advantage that inhibition of polymerization is hardly caused when UV polymerization is performed. The (meth)acrylic polymer (E) is a (meth)acrylic polymer that includes, as a monomer unit, a (meth)acrylic monomer having a tricyclic or higher alicyclic structure and that has a weight average molecular weight of 1000 or more and less than 30000. By providing a bulky structure, such as a tricyclic or higher alicyclic structure, to the (meth) acrylic polymer (E), the adhesiveness of the acrylic pressure-sensitive adhesive tape to an adherend having low polarity, formed of polyethylene or polypropylene, etc., can be remarkably improved.

The (meth)acrylic monomer that forms the (meth)acrylic polymer (E) is, for example, a (meth)acrylic acid ester represented by the following general formula (1):

$$CH_2=C(R^1)COOR^2 \qquad (1)$$

[wherein, $R^1$ is a hydrogen atom or methyl group and $R^2$ is an alicyclic hydrocarbon group having a tricyclic or higher alicyclic structure].

It is preferable that the alicyclic hydrocarbon group has a three-dimensional structure, such as a bridged ring structure. By providing a tricyclic or higher alicyclic structure containing a bridged ring structure to the (meth)acrylic polymer (E), as stated above, the adhesiveness of the acrylic pressure-sensitive adhesive tape can be further improved. In particular, the pressure-sensitive adhesive force to an adherend having low polarity, such as polypropylene, can be improved more remarkably. Further, resistance to resilience and a holding property can be both achieved. That is, by providing a tricyclic or higher alicyclic structure containing a bridged ring structure to the (meth)acrylic polymer (E), an acrylic pressure-sensitive adhesive tape can be obtained, in which pressure-sensitive adhesive force, resistance to resilience, and a holding property are combined at a high level. It is assumed that such properties are obtained because the cohesive force of the unbridged components in the acrylic pressure-sensitive adhesive tape is enhanced by containing a bulky structure, such as a tricyclic or higher alicyclic structure having a bridged ring structure. Examples of the alicyclic hydrocarbon group having a bridged ring structure include, for example, a dicyclopentanyl group represented by the following formula (2a), a dicyclopentenyl group represented by the following formula (2b), an adamantyl group represented by the following formula (2c), a tricyclopentanyl group represented by the following formula (2d), and a tricyclopentenyl group represented by the following formula (2e), etc. Among the (meth)acrylic monomers having a tricyclic or higher alicyclic structure containing a bridged ring structure, (meth) acrylic monomers having a saturated structure, such as the dicyclopentanyl group represented by the following formula (2a), the adamantyl group represented by the following formula (2c), and the tricyclopentanyl group represented by the following formula (2d), can be particularly and preferably used as a monomer that forms the (meth)acrylic polymer (E), in terms of hardly causing inhibition of polymerization, when UV polymerization is adopted for the synthesis of the (meth)acrylic polymer (E).

[Formula 1]

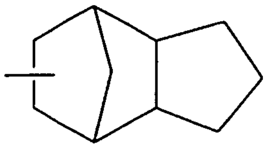

(2a)

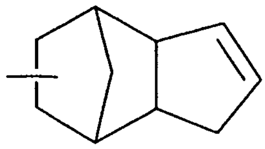

(2b)

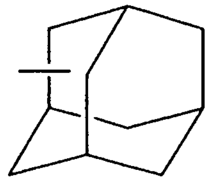

(2c)

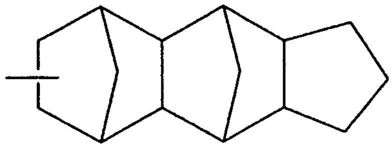

(2d)

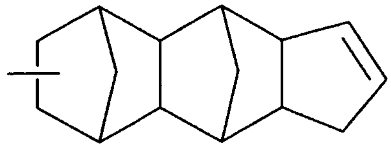

(2e)

Examples of the (meth)acrylic monomer having such a tricyclic or higher alicyclic structure containing a bridged ring structure include (meth)acrylic acid esters, such as dicyclopentanyl methacrylate, dicyclopentanyl acrylate, dicyclopentanyl oxyethyl methacrylate, dicyclopentanyl oxyethyl acrylate, tricyclopentanyl methacrylate, tricyclopentanyl acrylate, 1-adamantyl methacrylate, 1-adamantyl acrylate, 2-methyl-2-adamantyl methacrylate, 2-methyl-2-adamantyl acrylate, 2-ethyl-2-adamantyl methacrylate, and 2-ethyl-2-adamantyl acrylate. These (meth) acrylic monomers can be used alone or in combination.

The (meth)acrylic polymer (E) may also contain, if necessary, another monomer component (copolymerizable monomer) that is copolymerizable with the aforementioned (meth)acrylic monomer. That is, the (meth) acrylic polymer (E) may also contain a copolymerizable monomer along with the (meth)acrylic monomer having a tricyclic or higher alicyclic structure that is a major component.

Examples of the copolymerizable monomer include (meth)acrylic acid esters, such as: (meth)acrylic acid alkyl esters including (meth)acrylic acid methyl, (meth)acrylic acid ethyl, (meth) acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid-2-ethylhexyl, (meth)acrylic acid heptyl, (meth)acrylic acid octyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, and (meth)acrylic acid dodecyl; esters of (meth)acrylic acids with alicyclic alcohols including (meth)acrylic acid cyclohexyl and (meth)acrylic acid isobornyl; (meth)acrylic acid aryl esters including (meth)acrylic acid phenyl and (meth)acrylic acid benzyl; and (meth)acrylic acid esters obtained from alcohols derived from terpene compounds. These (meth) acrylic acid esters can be used alone or in combination of two or more thereof.

Examples of the another copolymerizable monomer include: (meth)acrylic acid alkoxyalkyl monomers, such as (meth) acrylic acid methoxyethyl, (meth) acrylic acid ethoxyethyl, (meth) acrylic acid propoxyethyl, (meth) acrylic acid butoxyethyl, and (meth) acrylic acid ethoxypropyl; salts, such as (meth) acrylic acid alkali metal salt; di(meth)acrylic acid ester monomers of (poly)alkylene glycols, such as di(meth)acrylic acid ester of ethylene glycol, di (meth)acrylic acid ester of diethylene glycol, di(meth)acrylic acid ester of triethylene glycol, di(meth)acrylic acid ester of polyethylene glycol, di(meth)acrylic acid ester of propylene glycol, di(meth)acrylic acid ester of dipropylene glycol, and di (meth) acrylic acid ester of tripropylene glycol; poly(meth)acrylic acid ester monomers, such as trimethylolpropane tri(meth)acrylic acid ester; vinyl esters, such as vinyl acetate and vinyl propionate; halogenated vinyl compounds, such as vinylidene chloride, (meth)acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine and (meth)acrylic acid-2-aziridinylethyl; epoxy group-containing vinyl monomers, such as allyl glycidyl ether, (meth)acrylic acid glycidyl ether and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; sulfonic acid group-containing monomers, such as styrene sulfonic acid, allyl sulfonic acid, 2-(meth)acrylamide-2-methylpropanesulfonic acid, (meth)acrylamide

propanesulfonic acid, sulfopropyl(meth)acrylate, and (meth)acryloyloxy naphthalene sulfonic acid; phosphate group-containing monomers, such as 2-hydroxyethyl acryloyl phosphate; acid anhydride group-containing monomers, such as maleic acid anhydride and itaconic acid anhydride; reactive halogen-containing vinyl monomers, such as 2-chloroethyl vinyl ether and monochloro vinyl acetate; aromatic vinyl compound monomers, such as styrene, α-methylstyrene, and vinyl toluene; amide group-containing vinyl monomers, such as (meth)acrylamide, N-isopropyl(meth)acrylamide, N-butyl(meth)acrylamide, N,N-diethyl(meth)acrylamide, N,N-dimethyl(meth)acrylamide, N-methylol(meth)acrylamide, N-ethylol(meth)acrylamide, N-methylolpropane(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N- (meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl pyrazole, N-vinyl isoxazole, N-vinyl thiazole, N-vinyl isothiazole, N-vinyl pyridazine; N-vinyl carboxylic acid amides; lactam monomers, such as N-vinyl caprolactam; cyanoacrylate monomers, such as (meth)acrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; imide group-containing monomers, such as cyclohexyl maleimide and isopropyl maleimide; isocyanate group-containing monomers, such as 2-isocyanate ethyl(meth)acrylate; hydroxyl group-containing monomers, such as (meth) acrylic acid hydroxyalkyls including (meth) acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl)methyl methacrylate; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; olefins or dienes, such as ethylene, butadiene, isoprene, and isobutylene; vinyl ethers, such as vinyl alkyl ether; vinyl chloride; organic silicon-containing vinyl monomers, such as vinyltrimethoxysilane, γ-methacryloxpropyl trimethoxy silane, allyltrimethoxysilane, trimethoxysilylpropylallylamine, and 2-methoxy ethoxy trimethoxy silane; and macro-monomers having a radically polymerizable vinyl group at the monomer end to which a vinyl group has been polymerized. These monomers can be polymerized, alone or in combination thereof, with the aforementioned (meth)acrylic monomers.

A functional group reactive with an epoxy group or an isocyanate group may be further introduced into the (meth)acrylic polymer (E). Examples of such a functional group include a hydroxyl group, carboxyl group, amino group, amide group, and a mercapto group. When the (meth)acrylic polymer (E) is produced, it is preferable to use (copolymerize) a monomer having such a functional group.

The weight average molecular weight of the (meth)acrylic polymer (E) is 1000 or more and less than 30000, preferably 1500 or more and less than 20000, and more preferably 2000 or more and less than 10000. If the weight average molecular weight of the (meth)acrylic monomer (E) is 30000 or more, there are sometimes the cases where the effect of improving the pressure-sensitive adhesive force of the pressure-sensitive adhesive tape cannot be sufficiently obtained. Conversely, if the weight average molecular weight is less than 1000, there are sometimes the cases where, because the molecular weight is too small, the pressure-sensitive adhesive force or holding property of the pressure-sensitive adhesive tape is decreased.

The weight average molecular weight can be determined by a GPC method in terms of polystyrene. Specifically, the weight average molecular weight can be measured by using HPLC8020 and two TSKgel GMH-Hs(20) as columns, which are made by Tosoh Corporation, and under conditions in which a tetrahydrofuran solvent is used and a flow rate is approximately 0.5 ml/min.

The content of the (meth)acrylic polymer (E) is preferably within a range of 2 to 70 parts by weight, and more preferably within a range of 5 to 50 parts by weight, based on 100 parts by weight of the acrylic polymer (D). If the (meth)acrylic polymer (E) is added in an amount larger than 70 parts by weight, the elastic modulus of a pressure-sensitive adhesive layer formed of the acrylic pressure-sensitive adhesive composition according to the present embodiment becomes large, and hence there are sometimes the cases where the adhesiveness at a low-temperature is deteriorated or the pressure-sensitive adhesive force is not exerted even at room temperature. Conversely, if the addition amount thereof is smaller than 2 parts by weight, there are sometimes the cases where the effect of adding the (meth)acrylic polymer (E) cannot be obtained.

The glass transition temperature (Tg) of the (meth) acrylic polymer (E) is within a range of approximately 20°C or higher and approximately 300°C or lower, preferably within a range of approximately 30°C or higher and approximately 300°C or lower, and more preferably within a range of approximately 40°C or higher and approximately 300°C or lower. If the glass transition temperature (Tg) is lower than approximately 20°C, the cohesive force of the pressure-sensitive

adhesive layer that forms the surface layer, at a temperature higher than or equal to room temperature, is decreased, and hence there are sometimes the cases where the holding property or the adhesiveness at a high-temperature is decreased. The glass transition temperatures of typical materials that can be used as monomer components of the (meth)acrylic polymer (E) in the present embodiment are shown in Table 1. The glass transition temperatures shown there are nominal values described in documents or catalogs, etc., or values calculated based on the following Equation (3) (Fox Equation):

$$1/Tg = W1/Tg1 + W2/Tg2 + *** + Wn/Tgn \qquad (3)$$

[wherein, Tg represents the glass transition temperature of the (meth)acrylic polymer (E) (unit: K), Tgi (i= 1, 2, *** , n) represents the glass transition temperature of a homopolymer that has been formed of a monomer i (unit: K), and Wi (i= 1, 2, *** , n) represents the weight fraction of the monomer i in the whole monomer components]. The above Equation (3) is adopted when the (meth)acrylic polymer (E) is formed of n types of monomer components of monomer 1, monomer 2, *** , monomer n.

[Table 1]

| COMPOSITION OF (METH) ACRYLIC POLYMER [E] | Tg (°C) | REMARKS |
|---|---|---|
| DCPMA | 175 | VALUE DESCRIBED IN DOCUMENTS. ETC. |
| DCPA | 120 | VALUE DESCRIBED IN DOCUMENTS. ETC. |
| IBXMA | 173 | VALUE DESCRIBED IN DOCUMENTS. ETC. |
| IBXA | 97 | VALUE DESCRIBED IN DOCUMENTS. ETC. |
| CHMA | 66 | VALUE DESCRIBED IN DOCUMENTS. ETC. |
| MMA | 105 | VALUE DESCRIBED IN DOCUMENTS. ETC. |
| ADMA | 250 | VALUE DESCRIBED IN DOCUMENTS. ETC. |
| ADA | 153 | VALUE DESCRIBED IN DOCUMENTS. ETC. |
| DCPMA/IBXMA40 | 174 | CALCULATED VALUE (BASED ON Fox EQUATION) |
| DCPMA/MMA40 | 144 | CALCULATED VALUE (BASED ON Fox EQUATION) |
| DCPMA/MMA60 | 130 | CALCULATED VALUE (BASED ON Fox EQUATION) |
| IBXMA/MMA60 | 130 | CALCULATED VALUE (BASED ON Fox EQUATION) |
| ADMA/MMA40 | 180 | CALCULATED VALUE (BASED ON Fox EQUATION) |
| ADA/MMA40 | 132 | CALCULATED VALUE (BASED ON Fox EQUATION) |

The abbreviations in Table 1 represent the following compounds.
DCPMA: Dicyclopentanyl Methacrylate
DCPA: Dicyclopentanyl Acrylate
IBXMA: Isobornyl Methacrylate
IBXA: Isobornyl Acrylate
CHMA: Cyclohexyl Methacrylate
MMA: Methyl Methacrylate
ADMA: 1-Adamantyl Methacrylate
ADA: 1-Adamantyl Acrylate
DCPMA/IBXMA 40: Copolymer of DCPMA 60 Parts by Weight and IBXMA 40 Parts by Weight
DCPMA/MMA 40: Copolymer of DCPMA 60 Parts by Weight and MMA 40 Parts by Weight
DCPMA/MMA 60: Copolymer of DCPMA 40 Parts by Weight and MMA 60 Parts by Weight
IBXMA/MMA 60: Copolymer of IBXMA 40 Parts by Weight and MMA 60 Parts by Weight
ADMA/MMA 40: Copolymer of ADMA 60 Parts by Weight and MMA 40 Parts by Weight
ADA/MMA 40: Copolymer of ADA 60 Parts by Weight and MMA 40 Parts by Weight

(Method of Producing (Meth)Acrylic Polymer (E))

The (meth) acrylic polymer (E) can be produced, for example, by subjecting (meth)acrylic monomers each having the aforementioned structure to polymerization with the use of a solution polymerization method, bulk polymerization method, emulsion polymerization method, suspension polymerization, and block polymerization, etc.

(Method of Adjusting Molecular Weight of (Meth)Acrylic Polymer (E))

In order to adjust the molecular weight of the (meth) acrylic polymer (E), a chain transfer agent can be used while the polymer (E) is being polymerized. Examples of the chain transfer agent to be used include: compounds having a mercapt group, such as octylmercaptan, dodecyl mercaptan, t-dodecyl mercaptan, and mercaptoethanol; thioglycolic acid, ethyl thioglycolate, propyl thioglycolate, butyl thioglycolate, t-butyl thioglycolate, 2-ethylhexyl thioglycolate, octyl thioglycolate, decyl thioglycolate, dodecyl thioglycolate, thioglycolic acid ester of ethylene glycol, thioglycolic acid ester of neopentyl glycol, and thioglycolic acid ester of pentaerythritol.

The use amount of the chain transfer agent is not particularly limited, but the chain transfer agent is usually contained in an amount of approximately 0.1 to approximately 20 parts by weight, preferably in an amount of approximately 0.2 to approximately 15 parts by weight, and more preferably in an amount of approximately 0.3 to approximately 10 parts by weight, based on 100 parts by weight of the (meth) acrylic monomer. By adjusting the addition amount of the chain transfer agent in such a way, a (meth)acrylic polymer (E) having a preferred molecular weight can be obtained. The chain transfer agent can be used alone or in combination of two or more thereof.

(Ratio of Layer Thickness)

The ratio of the thickness of the surface layer 30a (or the surface layer 30b) to the total of the thickness of the core layer 20 and that of the surface layer 30a (or the surface layer 30b) is preferably within a range of approximately 3 to approximately 70%. If the ratio is less than approximately 3%, there are sometimes the cases where desired adhesiveness cannot be obtained. Conversely, if the ratio is more than 70%, there are sometimes the cases where the effects that can be expected when the core layer 20 containing the bubbles (C) is included, such as a stress relaxation property and level-difference absorption property as a pressure-sensitive adhesive tape, cannot be obtained. Although not particularly limited, the total thickness of the acrylic pressure-sensitive adhesive tape 10 (the total of the thickness of the core layer 20 and that of the surface layer 30) is within a range of approximately 0.4 mm to approximately 4.0 mm, and preferably within a range of approximately 0.5 mm to approximately 2.5 mm.

(Method of Forming Multi-Layers)

A method of laminating the core layer 20 and the surface layer 30 is not particularly limited, but the methods described below can be used.

(1) Method of forming multi-layers by laminating the surface layer 30a on one of the surfaces of the core layer 20 and laminating the surface layer 30b on the other surface thereof, after the core layer 20 and the surface layer 30 have been separately cured: this method has the advantage that the accuracy of each layer thickness can be enhanced.
(2) Method of curing the core layer 20 after being coated onto the surface layer 30a (or the surface layer 30b) that has been cured in advance and then by curing the surface layer 30b (or the surface layer 30a) after being coated onto the core layer 20, or method of curing the surface layer 30a (or the surface layer 30b) after being coated onto one of the surfaces of the core layer 20 that has been cured in advance and then by curing the surface layer 30b (or the surface layer 30a) after being coated onto the other surface of the core layer 20: in this method, because one layer is coated onto another layer that has been cured, the accuracy of each layer thickness can be enhanced. Further, because one layer can be collectively coated onto another layer that has been cured, production steps can be simplified and production time can be shortened.
(3) Method of curing the surface layer 30 (or the core layer 20) and the core layer 20 (or the surface layer 30) after the core layer 20 (or the surface layer 30) has been sequentially or simultaneously coated onto the coated surface layer 30 (or the core layer 20) : in this method, both the surface layer 30 and the core layer 20 can be collectively coated.

For the formation of each layer, a coating roll, such as a roll coater or comma coater, may be used, or a slot die may be used. In particular, in the aforementioned method (3), a multi-layer slot die for coating each layer may also be used.

(Example of Method of Producing Acrylic Pressure-Sensitive Adhesive Tape)

[Preparation of Core Layer Composition]

The aforementioned (meth) acrylic acid alkyl ester and the colymerizable monomer are partially polymerized by mixing the two materials and a polymerization initiator. Thereby, a partial polymer (acrylic polymer syrup) having a predetermined rate of polymerization is produced. Subsequently, a predetermined amount of hollow glass microspheres (product name: CEL-STAR Z-27, made by Tokai Kogyo Co., Ltd.) are added to the acrylic polymer syrup. A precursor of a core layer composition is prepared by adding a fluorochemical surfactant (product name: Surflon S-393, made by AGC SEIMI CHEMICAL CO., LTD.; acrylic copolymer having a polyoxyethylene group and a fluorinated hydrocarbon group in its side chain; MW = 8300, 0.5 parts by weight) to the above syrup to which the hollow glass microspheres had been added. In the precursor of the composition for the core layer, the ratio of the volume of the hollow glass microspheres to the whole volume of the precursor of the composition for the core layer is, for example, approximately 1.5% by volume.

An apparatus, provided with both a stator in which minute teeth are provided on a disk having a through-hole at its center and a rotor that faces the stator and in which teeth that are as minute as those in the stator are provided on a disk, is prepared. The precursor of the core layer composition is introduced between the teeth on the stator and those in the rotor in the apparatus, and nitrogen gas is introduced into the precursor of the core layer composition through the through-hole, while the rotor is being rotated at high speed. Thereby, the core layer composition is obtained by mixing bubbles into the precursor of the core layer composition. The mixing is performed such that the bubbles are contained in an amount of, for example, approximately 20% by volume based on the whole volume of the core layer composition.

[Preparation of Surface Layer Composition]

A surface layer (meth)acrylic polymer (E) is prepared by combining the aforementioned (meth)acrylic monomer, chain transfer agent, polymerization initiator, and, if necessary, a copolymerizable monomer into a predetermined solvent. Subsequently, the aforementioned acrylic polymer syrup (partial polymer) and the obtained (meth)acrylic polymer (E) are mixed together to obtain a surface layer composition.

[Production of Core Layer]

The core layer composition is coated, with, for example, a roll coater, on one of the surfaces of a polyester film (release liner), the one of the surfaces being subjected to a release treatment. Subsequently, a release liner of the same type is attached to the other surface of the coated core layer composition. In this case, the two are attached to each other such that the surface of the release liner, the surface being subjected to a release treatment, faces the other surface of the core layer composition. Subsequently, ultraviolet rays are radiated by using a black light lamp. The core layer 20 is produced through the above procedures.

[Production of Surface Layer]

The surface layer composition is coated, with, for example, a roll coater, on one of the surfaces of a polyester film (release liner), the one of the surfaces being subjected to a release treatment. Subsequently, a release liner of the same type is attached to the other surface of the coated surface layer composition. In this case, the two are attached to each other such that the surface of the release liner, the surface being subjected to a release treatment, faces the other surface of the surface layer composition. Subsequently, ultraviolet rays are radiated by using a black light lamp. The surface layer 30 is produced through the above procedures.

[Attachment of Core Layer/Surface Layer]

The release liner attached to the one of the surfaces of each of the core layer 20 and the surface layer 30, which have been obtained through the aforementioned procedures, is peeled off such that the pressure-sensitive adhesive surfaces of both of them are attached to each other. Thereby, the acrylic pressure-sensitive adhesive tape 10 is produced.

The surface layer composition and the core layer composition can contain, as optional components, various additives that are generally used in the field of pressure-sensitive adhesive compositions. A plasticizer, softener, filler, colorant (pigment, dye, or the like), antioxidant, leveling agent, stabilizer, and antiseptic, etc., are exemplified as such optional components. Such additives that are conventionally and publicly known can be used by ordinary methods.

The acrylic pressure-sensitive adhesive tape according to the present embodiment may be a so-called pressure-sensitive adhesive tape comprising a substrate, in which the pressure-sensitive adhesive layer disclosed herein is provided on one or both surfaces of a sheet-shaped substrate (supporting body) in a fixed manner, i.e., without an

intention of separating the pressure-sensitive adhesive layer from the substrate. More specifically, examples of the structure of the pressure-sensitive adhesive tape having such a form include: a structure of sheet-shaped substrate/core layer/surface layer; a structure of sheet-shaped substrate/surface layer/core layer/surface layer; a structure of surface layer/core layer/sheet-shaped substrate/core layer/ surface layer; and a structure of surface layer/core layer/surface layer/sheet-shaped substrate/surface layer/core layer/surface layer, etc. The concept of the pressure-sensitive adhesive tape described herein can involve objects referred to as a pressure-sensitive adhesive sheet, pressure-sensitive adhesive label, and pressure-sensitive adhesive film, etc.

The aforementioned substrate can be formed of a material appropriately selected, in accordance with the application of the pressure-sensitive adhesive tape, from the group consisting of, for example: plastic films, such as a polypropylene film, ethylene-propylene copolymer film, polyester film, and polyvinylchloride film; foam substrates, such as a polyurethane foam and polyethylene foam; paper, such as craft paper, crepe paper, and Japanese paper; cloth, such as cotton cloth and staple fiber cloth; nonwoven cloth, such as polyester nonwoven fabric and vinylon nonwoven fabric; metallic foils, such as aluminum foil and copper foil; and the like. As the aforementioned plastic films, both of a non-oriented film and an oriented (uniaxially oriented or biaxially oriented) film can be used. The surface of the substrate on which the pressure-sensitive adhesive layer is to be provided may be coated with a primer or be subject to a surface treatment, such as a corona discharge treatment. The thickness of the substrate can be appropriately selected in accordance with the purpose, but is generally within a range of approximately 10 $\mu$m to approximately 500 $\mu$m (typically within a range of 10 $\mu$m to 200 $\mu$m).

The acrylic pressure-sensitive adhesive tape according to the present embodiment can be preferably used in the application in which members made of both various resins including, for example, PP (polypropylene), ABS (acrylonitrile-butadiene-styrene copolymer), SBS (styrene-butadiene-styrene block copolymer), PC (polycarbonate), PVC (vinyl chloride), and an acrylic resin, such as PMMA (polymethyl methacrylate), and metals, such as SUS and aluminum, are joined (fixed) to the surfaces of automobiles (coatings of the bodies), house and building materials, and home electronic appliances, etc.

Further, the acrylic pressure-sensitive adhesive tape according to the present embodiment can be preferably used in the application in which various optical members are attached to, for example, liquid crystal cells, optical polyester films, and touch panel members, etc. Accordingly, the technique described herein includes a laminated body in which the pressure-sensitive adhesive layer including the acrylic pressure-sensitive adhesive composition is provided in the optical member. This laminated body typically has an aspect in which the pressure-sensitive adhesive layer on the optical member is protected by a release liner. The optical member in which such a pressure-sensitive adhesive layer is provided can be easily attached to the surface, etc. , of a plastic cover lens panel, glass, or liquid crystal cell. The optical member is not particularly limited, but can be a polarizing film, phase difference film, transparent conductive film (ITO film), etc. Such an optical member may have a single-layer structure made of the same material, or may have a multiple-layer structure made of a plurality of materials. As a method of forming the pressure-sensitive adhesive layer on the optical member, a method of directly providing the pressure-sensitive adhesive layer thereto or a method of transferring the pressure-sensitive adhesive layer thereto can be appropriately adopted, in the same way as in the case where the pressure-sensitive adhesive layer is formed on a substrate. Typically, the pressure-sensitive adhesive layer formed on a release liner is transferred to the base surface of the optical member.

As stated above, the acrylic pressure-sensitive adhesive tape according to the present embodiment comprises the core layer 20 and the surface layer 30 provided on one or both sides of the core layer 20. The core layer 20 comprises the acrylic polymer (A), and the surface layer 30 comprises: the acrylic polymer (D); and the acrylic polymer (E) that includes, as a monomer unit, a (meth) acrylic monomer having a tricyclic or higher alicyclic structure and that has a weight average molecular weight of 1000 or more and less than 30000. Thereby, the adhesiveness of the acrylic pressure-sensitive adhesive tape can be improved.

Although both the surface layers 30a and 30b are provided on both sides of the core layer 20 in the acrylic pressure-sensitive adhesive tape 10 according to the aforementioned embodiments, either of the surface layers 30a and 30b may only be provided on the core layer 20. In addition, although the core layer 20 comprises the acrylic polymer (A) as a pressure-sensitive adhesive composition, the fine particle (B), and the bubble (C), but may comprise at least the acrylic polymer (A).

## Examples

Hereinafter, the present invention will be described in detail based on Examples, but the invention should not be limited at all by these Examples.

Components of the surface layer compositions in the acrylic pressure-sensitive adhesive tapes according to Examples 1 to 7 and Comparative Examples 1 to 5 are shown in Table 2.

[Table 2]

| | SURFACE LAYER | | | |
|---|---|---|---|---|
| | ACRYLIC POLYMER (D) | (METH)ACRYLIC POLYMER (E) | | |
| | COMPOSTION RATIO (100 PARTS BY WEIGHT) | TYPE | NUMBER OF ADDED PARTS (BASED ON 100 PARTS BY WEIGHT OF ACRYLIC POLYMER (D)) | CHAIN TRANSFER AGENT |
| EXAMPLE 1 | 2EHA/NVP=86/14 | DCPMA | 20 PARTS BY WEIGHT | GSH ACID |
| EXAMPLE 2 | 2EHA/NVP=86/14 | DCPMA | 20 PARTS BY WEIGHT | GSH |
| EXAMPLE 3 | 2EHA/NVP=86/14 | DCPMA | 20 PARTS BY WEIGHT | LSH |
| EXAMPLE 4 | 2EHA/NVP=86/14 | DCPMA/IBXMA40 | 20 PARTS BY WEIGHT | GSH ACID |
| EXAMPLE 5 | 2EHA/AA=94/6 | DCPMA LOW | 20 PARTS BY WEIGHT | GSH ACID |
| EXAMPLE 6 | 2EHA/AA=94/6 | DCPA | 20 PARTS BY WEIGHT | LSH |
| EXAMPLE 7 | 2EHA/NVP=86/14 | ADMA | 20 PARTS BY WEIGHT | GSH ACID |
| COMPARATIVE EXAMPLE 1 | 2EHA/NVP=86/14 | - | - | - |
| COMPARATIVE EXAMPLE 2 | 2EHA/NVP=86/14 | CHMA | 20 PARTS BY WEIGHT | GSH |
| COMPARATIVE EXAMPLE 3 | 2EHA/NVP=86/14 | IBXA | 20 PARTS BY WEIGHT | GSH |
| COMPARATIVE EXAMPLE 4 | 2EHA/AA = 94/6 | - | - | - |
| COMPARATIVE EXAMPLE 5 | 2EHA/AA=94/6 | CHMA | 20 PARTS BY WEIGHT | GSH |

The abbreviations in Table 2 represent the following compounds.

2EHA: 2-Ethylhexyl Acrylate
NVP: N-vinyl-2-pyrrolidone
AA: Acrylic Acid
DCPMA: Dicyclopentanyl Methacrylate
DCPMA Low: Dicyclopentanyl Methacrylate having a polymerization degree lower than that of DCPMA (Examples 1 and 3)
DCPA: Dicyclopentanyl Acrylate
IBXMA: Isobornyl Methacrylate
CHMA: Cyclohexyl Methacrylate
IBXA: Isobornyl Acrylate
ADMA: 1-Adamantyl Methacrylate
GSH Acid: Thioglycolic Acid
GSH: 2-Mercaptoethanol
LSH: Lauryl Mercaptan

(Preparation of (Meth)Acrylic Polymer 1 (DCPMA) as (E) Component)

One hundred parts by weight of toluene, 100 parts by weight of dicyclopentanyl methacrylate (DCPMA) (product name: FA-513M, made by Hitachi Chemical Co., Ltd.), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 1 to be obtained. The glass transition temperature of the

obtained (meth) acrylic polymer 1 was 175°C and the weight average molecular weight thereof was 4600.

(Preparation of (Meth)Acrylic Polymer 2 (DCPMA) as (E) Component)

One hundred parts by weight of toluene, 100 parts by weight of dicyclopentanyl methacrylate (DCPMA) (product name: FA-513M, made by Hitachi Chemical Co., Ltd.), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 2 to be obtained. The glass transition temperature of the obtained (meth) acrylic polymer 2 was 175°C and the weight average molecular weight thereof was 3600.

(Preparation of (Meth)Acrylic Polymer 3 (DCPMA) as (E) Component)

One hundred parts by weight of toluene, 100 parts by weight of dicyclopentanyl methacrylate (DCPMA) (product name: FA-513M, made by Hitachi Chemical Co. , Ltd.), and 8 parts by weight of lauryl mercaptan (LSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth) acrylic polymer 3 to be obtained. The glass transition temperature of the obtained (meth)acrylic polymer 3 was 175°C and the weight average molecular weight thereof was 3300.

(Preparation of (Meth)Acrylic Polymer 4 (DCPMA/IBXMA 40) as (E) Component))

One hundred parts by weight of toluene, 60 parts by weight of dicyclopentanyl methacrylate (DCPMA) (product name: FA-513M, made by Hitachi Chemical Co., Ltd.), 40 parts by weight of isobornyl methacrylate, and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth) acrylic polymer 4 to be obtained. The glass transition temperature of the obtained (meth)acrylic polymer 4 was 174°C and the weight average molecular weight thereof was 4800.

(Preparation of (Meth)Acrylic Polymer 5 (DCPMA Low))

One hundred parts by weight of toluene, 100 parts by weight of dicyclopentanyl methacrylate (DCPMA) (product name: FA-513M, made by Hitachi Chemical Co., Ltd.), and 5 parts by weight of thioglycolic acid (GSH acid), as a chain transfer agent, were placed into a 4-neck flask. After they were stirred under a nitrogen atmosphere at 75°C for 1 hour, 0.2 parts by weight of azobisisobutyronitrile were placed therein as a thermal polymerization initiator to react with them at 75°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 5 to be obtained. The glass transition temperature of the obtained (meth)acrylic polymer 5 was 175°C and the weight average molecular weight thereof was 3000.

(Preparation of (Meth)Acrylic Polymer 6 (DCPA) as (E) Component)

One hundred parts by weight of toluene, 100 parts by weight of dicyclopentanyl acrylate (DCPA) (product name: FA-513AS, made by Hitachi Chemical Co., Ltd.), and 8 parts by weight of lauryl mercaptan (LSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth) acrylic polymer 6 to be obtained. The glass transition temperature of the obtained (meth)acrylic polymer 6 was 120°C and the weight average molecular weight thereof was 3600.

(Preparation of (Meth)Acrylic Polymer 7 (CHMA))

One hundred parts by weight of toluene, 100 parts by weight of cyclohexyl methacrylate (CHMA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 7 to be obtained. The glass transition temperature of the obtained (meth) acrylic polymer 7 was 66°C and the weight average molecular weight thereof was 3700.

(Preparation of (meth)acrylic polymer 8 (IBXA))

One hundred parts by weight of toluene, 100 parts by weight of isobornyl acrylate (IBXA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 8 to be obtained. The glass transition temperature of the obtained (meth) acrylic polymer 8 was 97°C and the weight average molecular weight thereof was 3300.

(Preparation of (Meth)Acrylic Polymer 9 (ADMA) as (E) Component)

One hundred parts by weight of toluene, 100 parts by weight of 1-adamantyl methacrylate (ADMA), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 9 to be obtained. The glass transition temperature of the obtained (meth) acrylic polymer 9 was 250°C and the weight average molecular weight thereof was 4100.

(Preparation of Acrylic Polymer Syrup 1 (2EHA/NVP = 86/14) as (D) Component)

Eighty six parts by weight of 2-ethylhexyl acrylate (2EHA), 14 parts by weight of N-vinyl-2-pyrrolidone (NVP), 0.05 parts by weight of a photo-polymerization initiator (product name: IRGACURE 184, made by Ciba Speciality Chemicals Inc.), and 0.05 parts by weight of a photo-polymerization initiator (product name: IRGACURE 651, made by Ciba Speciality Chemicals Inc.) were placed into a 4-neck flask. A partial polymer (acrylic polymer syrup 1) having a rate of polymerization of approximately 11% by weight was obtained by exposing the mixture to UV rays under a nitrogen atmosphere such that the mixture was partially photopolymerized.

(Preparation of Acrylic Polymer Syrup 2 (2EHA/AA = 94/6) as (D) Component)

Ninety four parts by weight of 2-ethylhexyl acrylate (2EHA), 6 parts by weight of acrylic acid (AA), 0.05 parts by weight of a photo-polymerization initiator (product name: IRGACURE 184, made by Ciba Speciality Chemicals Inc.), and 0.05 parts by weight of a photo-polymerization initiator (product name: IRGACURE 651, made by Ciba Speciality Chemicals Inc.) were placed into a 4-neck flask. A partial polymer (acrylic polymer syrup 2) having a rate of polymerization of approximately 8% by weight was obtained by exposing the mixture to UV rays under a nitrogen atmosphere such that the mixture was partially photopolymerized.

(Preparation of Acrylic Polymer Syrup 3 (2EHA/AA = 90/10) as (A) Component)

A monomer mixture formed of 90 parts by weight of 2-ethylhexyl acrylate (2EHA) and 10 parts by weight of acrylic acid (AA) was combined with 0.05 parts by weight of a photo-polymerization initiator (product name: IRGACURE 651, made by Ciba Speciality Chemicals Inc.), and 0.05 parts by weight of a photo-polymerization initiator (product name: IRGACURE 184, made by Ciba Speciality Chemicals Inc.). A partial polymer (acrylic polymer syrup 3) was obtained by radiating UV rays before the viscosity of the mixture (BH viscometer, No. 5 rotor, 10 rpm, measured temperature: 30°C) became 15 Pa*s.

(Example 1)

(Preparation of Surface Layer Composition)

After 20 parts by weight of the aforementioned (meth)acrylic polymer 1 and 0.085 parts by weight of trimethylolpropane triacrylate were added to 100 parts by weight of the aforementioned acrylic polymer syrup 1, they were uniformly mixed together such that a surface layer composition was prepared.

(Production of Surface Layer)

A coated layer having a final thickness of 50 μm was formed by coating the aforementioned surface layer composition on one of the surfaces of a polyester film having a thickness of 38 μm (product name: MRF, made by Mitsubishi Chemical Polyester Co., Ltd.), the one of the surfaces having been subjected to a release treatment with silicone. Subsequently, the surface of the coated surface layer composition was covered with one of the surfaces of a polyester film having a thickness of 38 μm (product name: MRN, made by Mitsubishi Chemical Polyester Co., Ltd.), the one of the surfaces having been subjected to a release treatment with silicone, so that the one of the surfaces of the film was located near to the coated layer. Thereby, oxygen was blocked from the coated layer of the surface layer composition (surface layer pressure-sensitive adhesive layer). The surface layer pressure-sensitive adhesive layer sheet thus obtained was irradiated, for 360 seconds, with UV rays with an illumination intensity of 5 $mW/cm^2$ (measured by TOPCON UVR-T1 having a maximum sensitivity at 350 nm), the UV rays being created by using a black light lamp (made by TOSHIBA CORPORATION) . The surface layer made of an acrylic pressure-sensitive adhesive layer having a thickness of 50 μm was obtained in this way. The gel fraction of the surface layer pressure-sensitive adhesive layer was 61.5% by weight. The polyester film covering each of the surfaces of the pressure-sensitive adhesive layer functions as a release liner.

(Preparation of Core Layer Composition)

After 0. 08 parts by weight of 1, 6-hexanediol diacrylate was added to 100 parts by weight of the aforementioned acrylic polymer syrup 3, hollow glass microspheres (product name of CEL-STAR Z-27, made by Tokai Kogyo Co., Ltd.) were further added in an amount of 9.5 parts by weight based on the syrup.

A precursor of the core layer composition was prepared by adding a fluorochemical surfactant (product name: Surflon S-393, made by AGC SEIMI CHEMICAL CO., LTD.; acrylic copolymer having a polyoxyethylene group and a fluorinated hydrocarbon group in its side chain; MW = 8300, 0.5 parts by weight) to the above syrup to which the hollow glass microspheres had been added. In the precursor of the core layer composition, the ratio of the volume of the hollow glass microspheres to the whole volume of the precursor of the core layer composition was approximately 26% by volume.

The precursor of the core layer composition was introduced between minute teeth on a stator in which the teeth are provided on a disk having a through-hole at its center, and teeth on a rotor that faces the stator and has, on a disk, the teeth as minute as those of the stator, in an apparatus provided with the stator and rotor. Thereafter, bubbles were mixed into the precursor of the core layer composition by introducing nitrogen gas into the precursor via the through-hole, while the rotor was being rotated at high speed. Thereby, the core layer composition was obtained. The bubbles were mixed in an amount of approximately 20% by volume based on the whole volume of the core layer composition.

(Production of Core Layer)

The obtained core layer composition was coated, with a roll coater, on one of the surfaces of a polyester film (release liner made of polyester) having a thickness of 38 μm, the one of the surfaces having been subjected to a release treatment, so that the thickness of the coated core layer composition was 1.2 mm. Subsequently, a polyester release liner of the same type was attached to the surface of the coated core layer composition such that one of the surfaces of the polyester release liner that had been subjected to a release treatment was located near to the core layer composition. Subsequently, ultraviolet rays were radiated, for three minutes, onto both the surfaces of the obtained layer using black light lamps each having an illumination intensity of 5 $mW/cm^2$. Thus, the core layer made of an acrylic pressure-sensitive adhesive layer having a thickness of 1.2 mm was obtained.

(Attachment of Core Layer/Surface Layer)

The acrylic pressure-sensitive adhesive tape according to Example 1 was obtained by peeling off the release

liner attached to one of the surfaces of each of the core layer and the surface layer, which had been obtained through the aforementioned procedures, and then by attaching, to each other, the pressure-sensitive adhesive surfaces of both of the two layers.

(Example 2)

An acrylic pressure-sensitive adhesive tape was obtained in the same way as in Example 1, except that 20 parts by weight of the aforementioned (meth) acrylic polymer 2 and 0.085 parts by weight of trimethylolpropane triacrylate were added to 100 parts by weight of the aforementioned acrylic polymer syrup 1. The gel fraction of the obtained surface layer pressure-sensitive adhesive layer was 67.7% by weight.

(Example 3)

An acrylic pressure-sensitive adhesive tape was obtained in the same way as in Example 1, except that 20 parts by weight of the aforementioned (meth)acrylic polymer 3 and 0.12 parts by weight of trimethylolpropane triacrylate were added to 100 parts by weight of the aforementioned acrylic polymer syrup 1. The gel fraction of the obtained surface layer pressure-sensitive adhesive layer was 59.7% by weight.

(Example 4)

An acrylic pressure-sensitive adhesive tape was obtained in the same way as in Example 1, except that 20 parts by weight of the aforementioned (meth)acrylic polymer 4 and 0.14 parts by weight of trimethylolpropane triacrylate were added to 100 parts by weight of the aforementioned acrylic polymer syrup 1. The gel fraction of the obtained surface layer pressure-sensitive adhesive layer was 68.5% by weight.

(Example 5)

An acrylic pressure-sensitive adhesive tape was obtained in the same way as in Example 1, except that 20 parts by weight of the aforementioned (meth)acrylic polymer 5 and 0.18 parts by weight of trimethylolpropane triacrylate were added to 100 parts by weight of the aforementioned acrylic polymer syrup 2. The gel fraction of the obtained surface layer pressure-sensitive adhesive layer was 62.1% by weight.

(Example 6)

An acrylic pressure-sensitive adhesive tape was obtained in the same way as in Example 1, except that 20 parts by weight of the aforementioned (meth)acrylic polymer 6 and 0.11 parts by weight of 1,6-hexanediol diacrylate were added to 100 parts by weight of the aforementioned acrylic polymer syrup 2. The gel fraction of the obtained surface layer pressure-sensitive adhesive layer was 69.7% by weight.

(Example 7)

An acrylic pressure-sensitive adhesive tape was obtained in the same way as in Example 1, except that 20 parts by weight the aforementioned (meth)acrylic polymer 9 and 0.12 parts by weight of trimethylolpropane triacrylate were added to 100 parts by weight of the aforementioned acrylic polymer syrup 1. The gel fraction of the obtained surface layer pressure-sensitive adhesive layer was 74.7% by weight.

(Comparative Example 1)

An acrylic pressure-sensitive adhesive tape was obtained in the same way as in Example 1, except that 0.045 parts by weight of 1,6-hexanediol diacrylate were added to 100 parts by weight of the aforementioned acrylic polymer syrup 1. The gel fraction of the obtained surface layer pressure-sensitive adhesive layer was 77.4% by weight.

(Comparative Example 2)

An acrylic pressure-sensitive adhesive tape was obtained in the same way as in Example 1, except that 20 parts by weight of the aforementioned (meth)acrylic polymer 7 and 0.14 parts by weight of 1,6-hexanediol diacrylate were added to 100 parts by weight of the aforementioned acrylic polymer syrup 1. The gel fraction of the obtained surface layer pressure-sensitive adhesive layer was 74.9% by weight.

(Comparative Example 3)

An acrylic pressure-sensitive adhesive tape was obtained in the same way as in Example 1, except that 20 parts by weight of the aforementioned (meth)acrylic polymer 8 and 0.1 parts by weight of trimethylolpropane triacrylate were added to 100 parts by the aforementioned acrylic polymer syrup 1. The gel fraction of the obtained surface layer pressure-sensitive adhesive layer was 71.9% by weight.

(Comparative Example 4)

An acrylic pressure-sensitive adhesive tape was obtained in the same way as in Example 1, except that 0.07 parts by weight of 1,6-hexanediol diacrylate were added to 100 parts by weight of the aforementioned acrylic polymer syrup 2. The gel fraction of the obtained surface layer pressure-sensitive adhesive layer was 75.2% by weight.

(Comparative example 5)

An acrylic pressure-sensitive adhesive tape was obtained in the same way as in Example 1, except that 20 parts by weight of the aforementioned (meth)acrylic polymer 7 and 0.11 parts by weight of 1,6-hexanediol diacrylate were added to 100 parts by weight of the aforementioned acrylic polymer syrup 2. The gel fraction of the obtained surface layer pressure-sensitive adhesive layer was 67.7% by weight.

(Test Method)

[180° Peeling-Off Pressure-Sensitive Adhesive Force Test]

After the release liner near to the core layer of the acrylic pressure-sensitive adhesive tape according to each of Examples and Comparative Examples was peeled off, a polyethylene terephthalate film having a thickness of 50 μm on which a primer treatment had been performed was attached. The obtained tape was cut into a piece having a width of 25 mm, which was used as a test specimen. In addition, a polypropylene plate (part number: 1600, made by Takiron Co., Ltd.) and an acrylic plate (ACRYLITE, made by Mitsubishi Rayon Co., Ltd.), which had been cleaned with isopropyl alcohol and had a thickness of 2 mm, were prepared. After the release liner (polyester film) near to the surface layer was peeled off, the pressure-sensitive adhesive surface near to the surface layer was attached to each of the polypropylene plate and the acrylic plate by one way of a 5-kg roller. After the pressure-sensitive adhesive tape was attached to each of the polypropylene plate and the acrylic plate, the test specimen was left uncontrolled under a 23°C-environment for 30 minutes. The pressure-sensitive adhesive force (resistance force) (unit: N/25 mm) of the pressure-sensitive adhesive tape to an adherend was measured by peeling off the other end of the tape in the 180° peeling-off direction at a speed of 300 mm/min. The case where the pressure-sensitive adhesive force to the polypropylene plate or the acrylic plate was larger than or equal to 40 N/25 mm was evaluated as good (°), while the case where the pressure-sensitive adhesive force thereto was less than 40 N/25 mm was evaluated as bad (×). Results of the measurement are shown in Table 3.

[Resistance to Resilience Test]

The pressure-sensitive adhesive tape according to each of Examples and Comparative Examples was cut into a piece having a width of 10 mm and a length of 90 mm. After the release liner near to the core layer of the acrylic pressure-sensitive adhesive tape according to each of Examples and Comparative Examples was peeled off, the tape was attached to a clean aluminum plate having a thickness of 0.5 mm, a width of 10 mm, and a length of 90 mm, which was used as a test specimen. Subsequently, the test specimen was curved so as to have a curvature of R = 50 mm by making the test specimen near to the aluminum plate follow a cylinder. Thereafter, the release liner (polyester film) near to the surface layer was peeled off, and then the test specimen was laminated onto the aforementioned polypropylene plate. After the test specimen, in the state of being laminated onto the polypropylene plate, was left uncontrolled at room temperature (25°C) for 24 hours, the distance created by pop-off of the pressure-sensitive adhesive tape, i.e., the distance between the surface of the polypropylene plate and the surface layer pressure-sensitive adhesive layer of the acrylic pressure-sensitive adhesive tape (average of the heights at both ends) (unit: mm) was measured. The case where the distance of the pop-off was smaller than or equal to 5 mm was evaluated as good (°), while the case where the distance thereof was larger than 5 mm was evaluated as bad (x). Results of the measurement are shown in Table 3. Herein, the values shown in Table 3 are average values with respect to arbitrary multiple points.

[Holding Property Test]

After the release liner near to the core layer of the acrylic pressure-sensitive adhesive tape according to each of Examples and Comparative Examples was peeled off, a polyethylene terephthalate film having a thickness of 50 μm on which a primer treatment had been performed was attached. The obtained tape was cut into a piece having a width of 10 mm, which was used as a test specimen. The pressure-sensitive adhesive surface of the test specimen having the area of 10 mm in width × 20 mm in length was attached to a bakelite plate that had been cleaned with toluene, and the test specimen was left uncontrolled under a 60°C-environment for 30 minutes. Thereafter, a weight was hung from one end of the specimen such that a 500-g load was applied in the shear direction, and the specimen, in the state of the weight being hung, was left uncontrolled under a 60°C-environment for 2 hours, thereafter allowing a holding property to be evaluated. The case where the test specimen had not dropped was evaluated as good (°), while the case where the test specimen had dropped was evaluated as bad (×). Results of the measurement are shown in Table 3.

[Table 3]

| | PEELING-OFF PRESSURE-SENSITIVE ADHESIVE FORCE TEST (PRESSURE-SENSITIVE ADHESIVE FORCE [N/25mm]) | | RESISTANCE TO RESILIENCE TEST | HOLDING PROPERTY TEST |
|---|---|---|---|---|
| | POLYPROPYLENE PLATE | ACRYLIC PLATE | POP-OFF DISTANCE [mm] | |
| EXAMPLE 1 | 42(○) | 59(○) | 1(○) | ○ |
| EXAMPLE 2 | 42(○) | 58(○) | 2(○) | ○ |
| EXAMPLE 3 | 43(○) | 61(○) | 3(○) | ○ |
| EXAMPLE 4 | 43(○) | 71(○) | 2(○) | ○ |
| EXAMPLE 5 | 40(○) | 59(○) | 3(○) | ○ |
| EXAMPLE 6 | 46(○) | 63(○) | 5(○) | ○ |
| EXAMPLE 7 | 42(○) | 61(○) | 0(○) | ○ |
| COMPARATIVE EXAMPLE 1 | 18(×) | 44(○) | 9(×) | ○ |
| COMPARATIVE EXAMPLE 2 | 32(×) | 62(○) | 2(○) | ○ |
| COMPARATIVE EXAMPLE 3 | 37(×) | 46(○) | 1(○) | ○ |
| COMPARATIVE EXAMPLE 4 | 18(×) | 38(×) | 10(×) | ○ |
| COMPARATIVE EXAMPLE 5 | 35(×) | 62(○) | 1(○) | ○ |

As shown in Table 3, it was confirmed that the pressure-sensitive adhesive force to the polypropylene plate in each of Examples was more improved in comparison with those in Comparative Examples 1 to 5. That is, the adhesiveness to an adherend having low polarity in each of Examples was more improved in comparison with those in Comparative Examples 1 to 5. Further, it was confirmed that the resistance to resilience in each of Examples was more improved in comparison with those in Comparative Examples 1 and 4 in which the (meth) acrylic polymer (E) was not contained in the surface layer. Furthermore, it was confirmed that a sufficient holding property was maintained in each of Examples. Accordingly, it was confirmed that excellent pressure-sensitive adhesive force, excellent resistance to resilience, and an excellent holding property were combined in each of Examples 1 to 7.

Reference Numerals

10 Acrylic Pressure-Sensitive Adhesive Tape

| | |
|---|---|
| 20 | Core Layer |
| 30, 30a and 30b | Surface Layer |

Industrial Applicability

The present invention can be used in an acrylic pressure-sensitive adhesive tape.

## Claims

1. An acrylic pressure-sensitive adhesive tape comprising:

   a core layer; and
   a surface layer provided on one or both sides of the core layer, wherein
   the core layer contains an acrylic polymer (A), and wherein
   the surface layer contains an acrylic polymer (D) and a (meth)acrylic polymer (E) that includes, as a monomer unit, a (meth)acrylic monomer having a tricyclic or higher alicyclic structure and that has a weight average molecular weight of 1000 or more and less than 30000.
   wherein the weight average molecular weight is determined by a GPC method in terms of polystyrene using HPLC8020 and two TSKgel GMH-Hs(20) as columns under conditions in which a tetrahydrofuran solvent is used and a flow rate is approximately 0.5 ml/min.

2. The acrylic pressure-sensitive adhesive tape according to claim 1, wherein
   the (meth)acrylic monomer is a (meth)acrylic acid ester represented by the following general formula (1):

   $$CH_2=C(R^1)COOR^2 \qquad (1)$$

   [wherein, $R^1$ is a hydrogen atom or methyl group and $R^2$ is an alicyclic hydrocarbon group having a tricyclic or higher alicyclic structure].

3. The acrylic pressure-sensitive adhesive tape according to claim 2, wherein
   the alicyclic hydrocarbon group has a bridged ring structure.

4. The acrylic pressure-sensitive adhesive tape according to any one of claims 1 to 3, wherein
   the content of the (meth)acrylic polymer (E) is within a range of 2 to 70 parts by weight based on 100 parts by weight of the acrylic polymer (D).

5. The acrylic pressure-sensitive adhesive tape according to any one of claims 1 to 4, wherein
   the core layer contains a fine particle (B) and bubbles (C).

## Patentansprüche

1. Acrylhaftklebeband umfassend:

   eine Kernschicht; und
   eine Oberflächenschicht, die auf einer oder beiden Seiten der Kernschicht bereitgestellt ist, wobei
   die Kernschicht ein Acrylpolymer (A) enthält, und wobei
   die Oberflächenschicht ein Acrylpolymer (D) und ein (Meth)acrylpolymer (E) enthält, welches als eine Monomereinheit ein (Meth)acrylmonomer mit einer tricyclischen oder höheren alicyclischen Struktur einschließt und welches ein gewichtsgemitteltes Molekulargewicht von 1000 oder mehr und weniger als 30000 hat,
   wobei das gewichtsgemittelte Molekulargewicht durch ein GPC-Verfahren bezüglich Polystyrol unter Verwendung von HPLC8020 und zwei TSKgel GMH-Hs(20) als Säulen unter Bedingungen bestimmt wird, bei denen ein Tetrahydrofuranlösungsmittel verwendet wird und eine Fließgeschwindigkeit ungefähr 0,5 ml/min beträgt.

2. Acrylhaftklebeband nach Anspruch 1, wobei das (Meth)acrylmonomer ein (Meth)acrylsäureester ist, der durch die folgende allgemeine Formel (1) wiedergegeben ist:

$$CH_2=C(R^1)COOR^2 \qquad (1)$$

wobei $R^1$ ein Wasserstoffatom oder eine Methylgruppe ist und $R^2$ eine alicyclische Kohlenwasserstoffgruppe mit einer tricyclischen oder höheren alicyclischen Struktur ist.

**3.** Acrylhaftklebeband nach Anspruch 2, wobei die alicyclische Kohlenwasserstoffgruppe eine verbrückte Ringstruktur aufweist.

**4.** Acrylhaftklebeband nach einem der Ansprüche 1 bis 3, wobei der Gehalt des (Meth)acrylpolymers (E) in einem Bereich von 2 bis 70 Gewichtsteilen, bezogen auf 100 Gewichtsteile des Acrylpolymers (D), liegt.

**5.** Acrylhaftklebeband nach einem der Ansprüche 1 bis 4, wobei die Kernschicht ein feines Teilchen (B) und Blasen (C) enthält.

## Revendications

**1.** Bande adhésive sensible à la pression acrylique comprenant :

une couche de noyau ; et
une couche de surface fournie sur un côté ou les deux côtés de la couche de noyau, dans laquelle
la couche de noyau contient un polymère acrylique (A), et dans laquelle
la couche de surface contient un polymère acrylique (D) et un polymère (méth)acrylique (E) qui comprend, comme unité monomère, un monomère (méth)acrylique présentant une structure alicyclique tricyclique ou supérieure et qui présente une masse moléculaire moyenne en masse de 1 000 ou supérieure et inférieure à 30 000,
dans laquelle la masse moléculaire moyenne en masse est déterminée par un procédé GPC en termes de polystyrène utilisant HPLC8020 et deux TSKgel GMH-Hs(20) comme colonnes dans des conditions dans lesquelles un solvant de tétrahydrofurane est utilisé et un débit est d'approximativement 0,5 ml/min.

**2.** Bande adhésive sensible à la pression acrylique selon la revendication 1, dans laquelle le monomère (méth)acrylique est un ester d'acide (méth)acrylique représenté par la formule générale (1) suivante :

$$CH_2=C(R^1)COOR^2 \qquad (1)$$

[dans laquelle, $R^1$ est un atome d'hydrogène ou un groupe méthyle et $R^2$ est un groupe hydrocarboné alicyclique présentant une structure alicyclique tricyclique ou supérieure].

**3.** Bande adhésive sensible à la pression acrylique selon la revendication 2, dans laquelle le groupe hydrocarboné alicyclique présente une structure de cycle ponté.

**4.** Bande adhésive sensible à la pression acrylique selon l'une quelconque des revendications 1 à 3, dans laquelle la teneur du polymère (méth)acrylique (E) se trouve dans un intervalle de 2 à 70 parties en poids rapporté à 100 parties en poids du polymère acrylique (D).

**5.** Bande adhésive sensible à la pression acrylique selon l'une quelconque des revendications 1 à 4, dans laquelle la couche de noyau contient une fine particule (B) et des bulles (C).

FIG.1

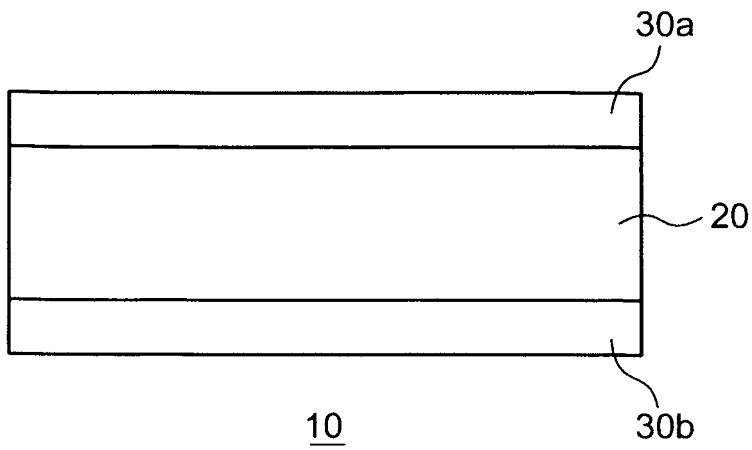

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6207151 A
- WO 2008070386 A1